# EUROPEAN PATENT SPECIFICATION

(11) **EP 2 638 722 B1**
(45) Date of publication and mention of the grant of the patent: **29.04.2020**
(21) Application number: 11839043.4
(22) Date of filing: 08.11.2011
(51) Int. Cl.: H04W 24/00, H04J 11/00, H04B 7/26, H04W 88/02, H04W 72/12, H04W 24/10, H04W 48/20, H04W 64/00

(54) **METHOD AND APPARATUS FOR PERFORMING MEASUREMENTS IN A MULTI CARRIER ENVIRONMENT**
VERFAHREN UND VORRICHTUNG ZUR DURCHFÜHRUNG VON MESSUNGEN IN EINER MEHRTRÄGERUMGEBUNG
PROCÉDÉ ET APPAREIL POUR EFFECTUER DES MESURES DANS UN ENVIRONNEMENT À PORTEUSES MULTIPLES

(30) Priority: 08.11.2010 IN 3320CH2010
(43) Date of publication of application: 18.09.2013
(73) Proprietor: Samsung Electronics Co., Ltd., Gyeonggi-do 443-742 (KR)
(72) Inventor: LUCKY, Kundan Kumar, Bangalore 560093 (IN); MANEPALLI, Venkateswara Rao, Bangalore 560093 (IN)
(74) Representative: Nederlandsch Octrooibureau
(86) International application number: PCT/KR2011/008481
(87) International publication number: WO 2012/064094

(56) References cited:
- EP-A1- 2 117 181
- EP-A1- 2 242 300
- US-A1- 2007 019 575
- US-A1- 2009 075 656
- "Evolved Universal Terrestrial Radio Access (E-UTRA) and Evolved Universal Terrestrial Radio Access (E-UTRAN); Overall description; Stage 2 (3GPP TS 36.300 version 8.4.0 Release 8); ETSI TS 136 300", IEEE, LIS, SOPHIA ANTIPOLIS CEDEX, FRANCE, vol. 3-R2, no. V8.4.0, 1 April 2008 (2008-04-01), XP014041816, ISSN: 0000-0001
- "3rd Generation Partnership Project; Technical Specification Group Radio Access Network; Physical layer; Measurements (FDD) (Release 9)", 3GPP STANDARD; 3GPP TS 25.215, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.2.0, 30 March 2010 (2010-03-30), pages 1-23, XP050402117, [retrieved on 2010-03-30]
- '3rd Generation Partnership Project; Technic al Specification Group Radio Access Network; Physical layer; Measurements (FD D) (Release 9)' 3GPP TS 25.215 V9.2.0 (2010-03) 31 March 2010, XP050402117
- '3rd Generation Partnership Project; Techni cal Specification Group Radio Access Network; Multiplexing and channel coding (FDD) (Release 10)' 3GPP TS 25.212 V10.0.0 (2010-09) 30 September 2010, XP050442401

## Description

### Technical Field

The present invention generally relates to the field of wireless communication systems, and more particularly relates to performing measurements in a multi-carrier environment.

### Background Art

In a typical cellular radio system, a user equipment (UE) communicates via a radio access network (RAN) to one or more core networks. The UE comprises various types of equipments such as mobile telephones (also known as cellular or cell phones), laptops with wireless communication capability, personal digital assistants (PDAs) etc.

In Universal Mobile Terrestrial System (UMTS), a UE communicates a set of supported frequency bands to a radio network controller (RNC). Accordingly, the RNC configures the set of frequency bands for transmission/reception of DL/UL data to/ from the UE. At any instance, the RAN may request UEs to perform measurements on a frequency corresponding to a frequency band. Each of the UEs may perform measurements on the requested frequency corresponding to the configured frequency band and communicate a measurement report to the RAN. For example, the RAN may utilize the received measurement report for optimizing network parameters (e.g., during handover (HO)).

The UE may utilize compressed mode (CM) when making measurements on another frequency (inter-frequency) or on a different Radio Access Technology (inter-RAT). Inter-frequency measurements are performed between channels of different frequencies within the same or a different UMTS band. Inter-RAT measurements are performed between channels of different Radio Access Technologies (e.g. GSM and UMTS).

In the compressed mode, transmission and reception by the UE over the frequency band configured for the UE is interrupted for a time period. This time period is commonly known as Transmission Gap. In other words, the transmission gap is a time duration during which no UL or DL activity is performed. Thus, during the transmission gap, the UE performs measurements on the other frequency. Once the measurement has been performed, transmission and reception resumes on the frequency band the UE is camped on.

Typically, the UE may perform data transmission and reception simultaneously over multiple frequency bands configured for the UE. For example in UMTS, DB-HSDPA involves High Speed Downlink Packet Access (HSDPA) channels being received on two carriers belonging to two different frequency bands. Similarly, 4C-HSDPA involves HSDPA channels being received on at most four carriers belonging to two frequency bands.

EP 2 117 181 A1 discloses that the UE sends its measurement capability information to the UTRAN, which uses the information to determine whether or not compressed mode is required by the UE for performing inter-frequency/inter-RAT measurements.

EP 2 242 300 A1 discloses that the network receives a capability information message indicating a component carrier capability from the mobile device, and determines whether to configure a measurement gap to at least one of the component carriers.

The 3GPP TS 36.300 version 8.4.0 Release 8 document "Evolved Universal Terrestrial Radio Access (E-UTRA) and Evolved Universal Terrestrial Radio Access (E-UTRAN)", dated 1 April 2008, discloses that the UE's capability and current operating frequency define whether a measurement is non gap assisted or gap assisted. The UE determines whether a particular cell measurement needs to be performed in a transmission/reception gap and the scheduler needs to know whether gaps are needed.

The document "3rd Generation Partnership Project; Technical Specification Group Radio Access Network; Physical layer; Measurements (FDD) (Release 9)", dated 30 March 2010, discloses that on command from the UTRAN, a UE shall monitor cells on other FDD frequencies and on other modes and radio access technologies that are supported by the UE (i.e. TDD, GSM, E-UTRA). To allow the UE to perform measurements, UTRAN shall command that the UE enters in compressed mode, depending on the UE capabilities. Parameterization of the compressed mode is performed using compressed mode parameters signaled by the UTRAN.

### Disclosure of Invention

### Technical Problem

The RAN may request the UE to perform measurements for a frequency corresponding to one of the configured frequency bands and report measurement reports back to the RAN. The UE may determine whether a compressed mode is required to be activated for performing measurements on the requested frequency band based on the capabilities of the UE. If the UE determines to utilize a compressed mode, the UE activates compressed mode for all the configured frequency bands for performing measurements on the requested frequency band. The application of the compressed mode on the non-requested frequency bands may interrupt data transmission and reception being performed over the frequency bands on which measurement are not requested by the RAN. The similar problem may exist in other wireless network systems such as long term evolution (LTE) carrier aggregation network in which measurement gaps are activated for component carriers for which measurements are not requested along with component carrier(s) for which measurements are requested by an evolved Node B.

### Solution to Problem

The present invention is defined by the appended set of claims. The present invention provides a method and apparatus for performing measurements in a multi-carrier environment. In one embodiment, a request to perform measurements on a frequency corresponding to one of frequency bands is received from a base station. It is determined whether a compressed mode is to be applied on the frequency corresponding to said one of the frequency bands based on capabilities of a user equipment. If so, the compressed mode is applied on the frequency corresponding to said one of the frequency bands so that measurements can be performed on the frequency corresponding to said one of the frequency bands without interrupting data activity on the remaining frequency bands. Otherwise, measurements are performed on the frequency corresponding to said one of the frequency bands without applying the compressed mode.

### Brief Description of Drawings

Figure 1 illustrates a block diagram of a wireless communication system for performing measurements on frequency bands, according to one embodiment.
Figure 2 is a process flowchart of an exemplary method of performing measurements on frequencies of frequency bands in a universal mobile terrestrial system (UMTS) network environment, according to one embodiment.
Figure 3 is a process flowchart of an exemplary method of performing measurements on frequencies of frequency bands in a long term evolution (LTE) network environment, according to another embodiment.
Figure 4 illustrates a block diagram of the user equipment showing various components for implementing embodiments of the present subject matter.

### Mode for the Invention

The present invention provides a method and apparatus for performing measurements in a multi-carrier environment. In the following detailed description of the embodiments of the invention, reference is made to the accompanying drawings that form a part hereof, and in which are shown by way of illustration specific embodiments in which the invention may be practiced. These embodiments are described in sufficient detail to enable those skilled in the art to practice the invention, and it is to be understood that other embodiments may be utilized and that changes may be made without departing from the scope of the present invention. The following detailed description is, therefore, not to be taken in a limiting sense, and the scope of the present invention is defined only by the appended claims.

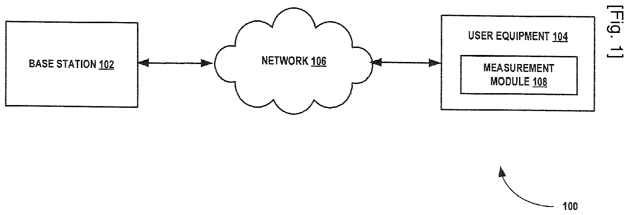

Figure 1 illustrates a block diagram of a wireless communication system 100 for performing measurements on frequency bands, according to one embodiment. In Figure 1, the wireless communication system 100 includes a base station 102, a user equipment (UE) 104, and a wireless network 106. The user equipment 102 includes a measurement module 108 for performing measurements on frequencies of a desired frequency band(s) in a multi-carrier environment.

The base station 102 may be an evolved node B for a long term evolution (LTE) network or a NodeB for a Universal Mobile Terrestrial System (UMTS) network. The UE 104 may be a cell phone, personal digital assistants, smart phones, laptop with wireless connectivity, tablets and the like capable of performing measurements on supported frequency bands and reporting to the base station 102. The wireless network 106 may be a LTE network, UMTS network or any other wireless network requiring the UE 104 to perform measurements on the supported frequency bands.

In an exemplary operation, the UE 104 may indicate a set of frequency bands supported for data transmission and reception in uplink and downlink to a radio network controller (RNC) (not shown) of the UMTS network via the base station 102. The RNC may configure the set of frequency bands supported by the UE 104 for communicating data packets in uplink and downlink. For optimization of the wireless network 106, the RNC may require the UE 104 to perform measurements on a frequency corresponding to a desired frequency band. Accordingly, the UE 104 receives a request from the base station 102 to perform measurements on the frequency corresponding to the desired frequency band.

Based on the request, the measurement module 108 determines whether the requested frequency is associated with a configured frequency band. If the requested frequency corresponds to the configured frequency band, then the measurement module 108 determines whether a compressed mode is to be applied on the frequency of the desired frequency band based on capabilities of the UE 104. If so, the measurement module 108 selectively applies the compressed mode on the frequency of the desired frequency band and performs measurements on the desired frequency corresponding to the desired frequency band in transmission gaps formed during the compressed mode. Otherwise, the measurement module 108 performs measurements on the desired frequency corresponding to the frequency band without applying the compressed mode. Accordingly, the UE 104 communicates a measurement report containing the measurements performed on the frequency of the desired frequency band to the base station 102.

One skilled in the art will realize that, the measurement module 108 need not apply a compressed mode on the entire set of frequencies in all the frequency bands configured for the UE 104 when a request for performing measurements on at least one frequency corresponding to one of the configured frequency bands is received from the base station 102. This helps avoid interruptions in data transmission and reception over the non-requested frequency bands configured for the UE 104. For example, in case of DB-HSDPA, the measurement module 108 applies a compressed mode on at least one of the dual frequency bands configured for the UE 104. Similarly, in case of 4C-HSDPA, the measurement module 108 applies a compressed mode to a desired carrier(s) from the four carriers corresponding to the two frequency bands.

If the measurement module 108 determines that the desired frequency band is not one of the configured frequency band, then the measurement module 108 applies a compressed mode to all the configured frequency bands supported by the UE 104. Accordingly, the measurement module 108 performs measurements on the frequency associated with each of the frequency bands in transmission gaps. Then, the UE 104 communicates a measurement report containing the measurement information to the base station 102.

The above process can also be applied to frequency bands while performing measurements in a LTE network. For example, the UE 104 may indicate a set of frequency bands supported for data transmission and reception in uplink and downlink to the eNB 102. The eNB 102 may configure the set of frequency bands supported by the UE 104 for communicating data packets in uplink and downlink. For optimizing the wireless network 106, the eNB 102 may require the UE 104 to perform measurements on frequencies corresponding to a selective frequency band. Accordingly, the UE 104 receives a request from the eNB 102 to perform measurements on the frequency corresponding to the desired frequency band.

Based on the request, the measurement module 108 determines whether the requested frequency in the associated band can be measured without applying measurement gap based on capabilities of the UE 104 utilizing the unused set of component carriers and the corresponding RF chains if the UE CA capability is spanning more than one frequency band or the UE 104 having additional capability in receiving/measuring a contiguous frequency than that is being currently configured. If so, the measurement module 108 performs measurements on the frequency corresponding to the desired frequency band without activating the measurement gap. Otherwise, the measurement module 108 activates the measurement gap on all the configured frequencies or on the selected frequency/frequencies of the desired frequency band and performs measurements on the frequency corresponding to the desired frequency band. Accordingly, the UE 104 communicates a measurement report containing the measurements performed on the desired frequency band to the eNB 102.

One skilled in the art will realize that, the measurement module 108 need not activate a measurement gap on the entire set of frequencies of frequency bands configured for the UE 104 when a request for performing measurements on a specific frequency corresponding to one of the configured frequency bands is received from the eNB 102. This helps avoid interruptions in data transmission and reception over the non-requested frequency bands configured for the UE 104. In other words, the base station 102 and the UE 104 continue to perform data activity on carriers associated with the frequency bands on which the compressed mode is not applied.

If the measurement module 108 determines that the frequency band associated with the frequency to be measured is not one of the configured frequency band, then the measurement module 108 activates a measurement gap on all the configured frequency bands supported by the UE 104. Accordingly, the measurement module 108 performs measurements on the frequency associated with each of the frequency bands. Then, the UE 104 communicates a measurement report containing the measurement information to the base station 102.

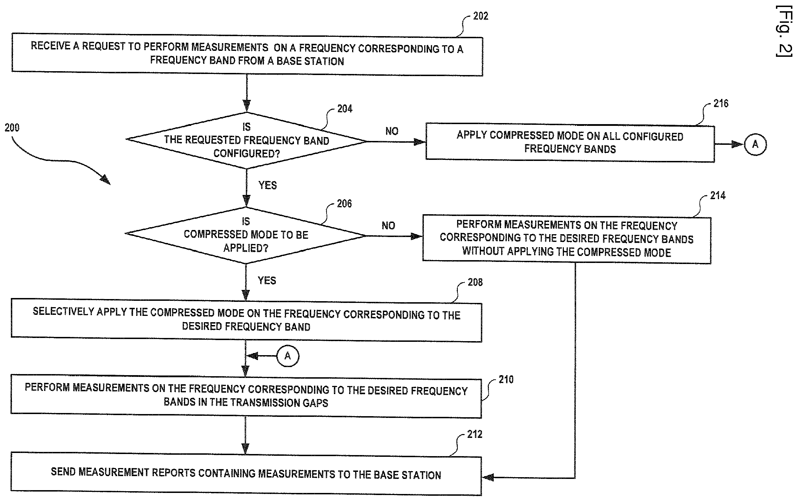

Figure 2 is a process flowchart 200 of an exemplary method of performing measurements on frequencies of frequency bands in a UMTS network environment, according to one embodiment. At step 202, a request to perform measurements on a frequency corresponding to a desired frequency band is received from the base station 102. At step 204, it is determined whether the frequency band corresponding to the frequency to be measured is one of frequency bands configured for the UE 104. If the selective frequency band is configured for the UE 104, then at step 206, it is determined whether a compressed mode is to be applied on the frequency of the frequency band based on capabilities of the UE 104. If so, the compressed mode is selectively applied on the frequency of the desired frequency band at step 208. In other words, the compressed mode is applied on the frequency/frequencies corresponding to the desired frequency band and not on the remaining frequency bands. Thus, data activity can be performed on the frequencies of the remaining frequency bands on which the compressed mode is not applied in an uninterrupted manner.

In one embodiment, the compressed mode is selectively applied on one or more carriers corresponding to the desired frequency band. The compressed mode is selectively applied per carrier corresponding to the desired frequency band based on a carrier index. The carrier index is provided in an IEs DPCH compressed mode information and/or DPCH compressed mode status information. Thus, using the carrier index information, signalling is achieved in following ways:

In the first case, the above defined set of messages configures the compressed mode with the DPCH compressed mode information. The carrier index is added to the DPCH compressed mode status information which is part of measurement control information message. In this case, though the UTMS network can configure compressed mode transmission gap pattern and make the compressed mode transmission gap pattern to be in deactivated state. Later, according to the measurement requirement, the base station 102 when triggering a measurement control message can activate the compressed mode transmission gap pattern per carrier including a new carrier index as part of the DPCH compressed mode status information.

In another case, the above defined set of messages configures the compressed mode with the DPCH compressed mode information which also includes the carrier index. In such case, the base station 102 configures a compressed mode transmission gap pattern per carrier or group of carriers. Later, when the base station 102 triggers a measurement control message to perform measurements for a frequency corresponding to a frequency band, the UE 104 activates the compressed mode only on the carriers that belong to a particular frequency band where the measurements need to be performed according to the compressed mode transmission gap pattern set for the corresponding carriers.

In yet another case, the IEs DPCH compressed mode information and the DPCH compressed mode status information includes a new carrier index. Accordingly, the compressed mode is activated and/or deactivated on the carriers using the new carrier index.

In another embodiment, when configuring a compressed mode per carrier or a group of carriers, compressed mode transmission gap pattern parameters can be set such that the entire UE 104 (i.e., all the carriers or the frequency bands that are operating) need not be moved to the compressed mode, thereby causing data disruption on the frequency bands. This can be achieved by defining different sets of CM parameters for the carriers belonging to different frequency bands.

If the compressed mode is required and configured by the base station 102, applicability of the compressed mode on the carriers corresponding to the desired frequency band is reported to the base station 102. The applicability of the compressed mode is reported at the compressed mode configuration performed with the above mentioned messages or upon reception of a measurement control message.

At step 210, measurements are performed on the frequency corresponding to the frequency band in transmission gaps formed during the compressed mode. At step 212, a measurement report containing the measurements associated with the frequency corresponding to the frequency band is sent to the base station 102. If the compressed mode is not to be applied, then at step 214, measurements are performed on the frequency corresponding to the frequency band without applying the compressed mode on the frequency and the step 212 is performed.

If, at step 204, it is determined that the frequency band is not configured for the UE 104 and a compressed mode is required to perform measurements according to capabilities of the UE 104, then at step 216, a compressed mode applied substantially simultaneously on the configured frequency bands and the step 210 is performed. Alternatively, when the frequency band is not configured for the UE 104 and a compressed mode is required to perform measurements according to the capabilities of the UE 104, the compressed mode is configured on the carriers of one of the frequency bands by the base station 102, where a radio frequency chain is shared between a frequency band configured for the UE 104 and the frequency band associated with the frequency on which measurements are to be performed, thereby allowing carriers of the configured frequency bands to be used for data transmission and reception. The base station 102 obtains the RF chain split information based on the frequency band combinations supported by the UE 104. Alternatively, the UE 104 communicates the RF chain split information to the base station 102 prior to receiving the request for performing measurements on a frequency corresponding to a frequency band.

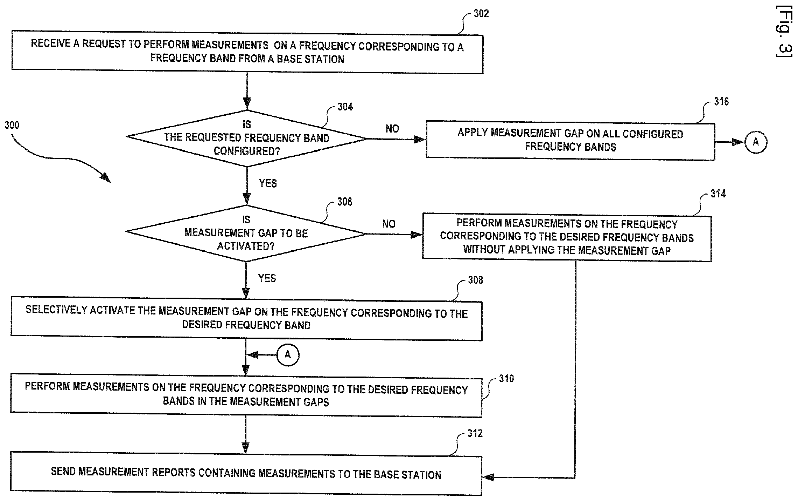

Figure 3 is a process flowchart 300 of an exemplary method of performing measurements on frequencies of frequency bands in a LTE network environment, according to another embodiment. At step 302, a request to perform measurements on a frequency corresponding to a desired frequency band is received from the base station 102. At step 304, it is determined whether the frequency band corresponding to the frequency to be measured is one of frequency bands configured for the UE 104. If the selective frequency band is configured for the UE 104, then at step 306, it is determined whether a measurement gap is to be activated on the frequency of the desired frequency band based on capabilities of the UE 104. If so, a measurement gap is selectively activated on the frequency of the frequency band at step 308. In other words, the measurement gap is activated on the frequency/frequencies corresponding to the desired frequency band and not on the remaining frequency bands. Thus, data activity can be performed on the frequencies of the remaining frequency bands on which the measurement gap is not activated in an uninterrupted manner.

The measurement gap is activated for all the component carriers in a frequency band. Alternatively, the measurement gap is activated for one or more component carriers among a set of component carriers. For example, the measurement gap is activated per carrier in such a way that at least one component carrier in the component carriers is active so that data activity between the UE 104 and the base station 102 is not interrupted. An activation time based on SFN or gapoffset differing from configuration to configuration can be used in order to interleave the measurement gap patterns across the component carriers.

In one embodiment, the measurement gap is activated for one or more component carriers corresponding to a particular frequency band based on a information element (IE) cell index and/or measurement gap configuration information element. The IE cell index and/or measurement gap configuration information element is added to measurement object information element, report configuration information element, or a measurement identifier information element. In this embodiment, if the IE cell index is applied to a measurement object, then the corresponding component carriers can use a common measurement gap configuration.

In another embodiment, a new information element can be defined as part of measurement configuration information element which may link the measurement objects, measurement identifiers, report configuration, and/or the measurement gap configurations applicable with a corresponding IE cell index where the measurement gap is to be applied. In yet another embodiment, a new information element can be defined as part of measurement configuration information element which may link measurement objects, measurement identifiers, and/or report configuration and the IE cell index which configures a measurement gap for that combination.

If the measurement gap is required and configured by the base station 102, applicability of the measurement gap on a set of component carriers corresponding to the desired frequency band is reported to the base station 102. The applicability of the measurement gaps is reported in a radio resource connection reconfiguration complete message.

At step 310, measurements are performed on the frequency corresponding to the desired frequency band in the measurement gaps. At step 312, a measurement report containing the measurements associated with the frequency corresponding to the desired frequency band is sent to the base station 102. If the measurement gap is not to be activated, then at step 314, measurements are performed on the frequency corresponding to the desired frequency band without activating the measurement gap on the desired frequency and the step 312 is performed. In one embodiment, measurements are performed on the frequency of the desired frequency bands using deactivated and non-configured component carriers (component carriers under capability of the UE 104). In another embodiment, measurements are performed on the frequency of the desired frequency bands using a deactivated secondary cell. For example, the secondary cell may be deactivated for performing measurements on the frequency without activating measurement gap on the frequency.

If, at step 304, it is determined that the frequency band is not configured for the UE 104 and a measurement gap is required to perform measurements according to capabilities of the UE 104, then at step 316, a measurement gap is activated substantially simultaneously on the configured frequency bands and the step 310 is performed. Alternatively, when the frequency band is not configured for the UE 104 and a measurement gap is required to perform measurements according to the capabilities of the UE 104, the measurement gap is configured on the carriers of the frequency bands by the base station 102, where a radio frequency chain is shared between a frequency band configured for the UE 104 and the frequency band associated with the frequency on which measurements are to be performed, thereby allowing carriers of the configured frequency bands to be used for data transmission and reception. The base station 102 obtains the RF chain split information based on the frequency band combinations supported by the UE 104. Alternatively, the UE 104 communicates the RF chain split information to the base station 102 prior to receiving the request for performing measurements on a frequency corresponding to a frequency band.

When a measurement request for a frequency is received, the UE 104 can perform measurements on said frequency without activating measurement gaps using unused set of CCs and the corresponding RF chains if the UE CA capability is spanning more than one band or the UE having more capability in receiving/measuring a contiguous frequency than that is being currently configured. This can be communicated to the base station 102 as part of UE capability.

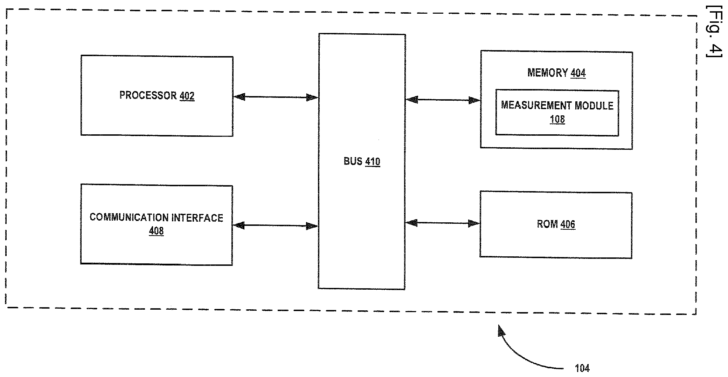

Figure 4 illustrates a block diagram of the UE 104 showing various components for implementing embodiments of the present subject matter. In Figure 4, the base station 102 includes a processor 402, memory 404, a read only memory (ROM) 406, a transceiver 408, a bus 410, and a communication interface 412.

The processor 402, as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit. The processor 402 may also include embedded controllers, such as generic or programmable logic devices or arrays, application specific integrated circuits, single-chip computers, smart cards, and the like.

The memory 404 may be volatile memory and non-volatile memory. The memory 404 includes the measurement module 108 for performing measurements on frequencies of frequency bands, according to the embodiments illustrated in Figures 1-3. A variety of computer-readable storage media may be stored in and accessed from the memory elements. Memory elements may include any suitable memory device(s) for storing data and machine-readable instructions, such as read only memory, random access memory, erasable programmable read only memory, electrically erasable programmable read only memory, hard drive, removable media drive for handling memory cards. Memory Sticks™, and the like.

Embodiments of the present subject matter may be implemented in conjunction with modules, including functions, procedures, data structures, and application programs, for performing tasks, or defining abstract data types or low-level hardware contexts. Machine-readable instructions stored on any of the above-mentioned storage media may be executable by the processor 402. For example, a computer program may include machine-readable instructions capable of performing measurements on frequencies of selected frequency bands, according to the teachings and herein described embodiments of the present subject matter. In one embodiment, the computer program may be included on a storage medium and loaded from the storage medium to a hard drive in the non-volatile memory.

The present embodiments have been described with reference to specific example embodiments, it will be evident that various modifications and changes may be made to these embodiments without departing from the broader scope of the various embodiments. Furthermore, the various devices, modules, and the like described herein may be enabled and operated using hardware circuitry, for example, complementary metal oxide semiconductor based logic circuitry, firmware, software and/or any combination of hardware, firmware, and/or software embodied in a machine readable medium. For example, the various electrical structure and methods may be embodied using transistors, logic gates, and electrical circuits, such as application specific integrated circuit.

## Claims

1. A method of performing measurements by a user equipment, UE, in a wireless communication system, the method comprising:
receiving (202), from a base station, a measurement control message to perform a measurement on at least one specific frequency band of a plurality of frequency bands other than at least one serving frequency band for the UE;
transmitting, by the UE to the base station, information indicating applicability of a compressed mode on carriers corresponding to the at least one specific frequency band to the base station in response to receiving the measurement control message;
determining whether the at least one specific frequency band is one of frequency bands that are previously configured to the UE;
determining whether a measurement type is an inter-frequency measurement or an inter-radio access technology, RAT, measurement based on the measurement control message, if the at least one specific frequency band is one of configured frequency bands that are previously configured to the UE;
determining (206) whether a compressed mode is required for all of the at least one serving frequency band or the compressed mode is required for the at least one specific frequency band based on capabilities of the UE and the information indicating applicability of the compressed mode, if the measurement type is the inter-frequency measurement or the inter-RAT measurement;
applying (214) the compressed mode only to the at least one specific frequency band except for the remaining frequency bands from the plurality of frequency bands, if the compressed mode is not required for all of the at least one serving frequency band; and
performing (210) the measurement for the at least one specific frequency band to which the compressed mode is applied, except for the remaining frequency bands,
wherein the capabilities of the UE comprises information indicating that the UE is capable to measure more than on frequency band or the UE is capable to measure at least one contiguous frequency of the at least one specific frequency band,
wherein the compressed mode is applied according to compressed mode transmission gap patterns for carriers that belong to the at least one specific frequency band, the compressed mode transmission gap patterns being configured per carrier or group of carriers, and
wherein the serving frequency band is associated with a serving cell configured to the UE.

2. The method of claim 1, further comprising:
applying (208) the compressed mode to all of the at least one serving frequency band, if the compressed mode is required for all of the at least one serving frequency band.

3. The method of claim 1,
wherein the performing of the measurement further comprises applying the compressed mode on one or more carriers associated with one of a first frequency band and a second frequency band,
wherein the first frequency band corresponds to a frequency band that is configured for the UE to communicate with the base station, and
wherein the second frequency band corresponds to a frequency band on which measurements are to be performed, if the compressed mode is for the at least one specific frequency band.

4. The method of claim 1, further comprising:
reporting (212), to the base station, a result of the measurement on the at least one specific frequency band.

5. A user equipment, UE, for performing measurements in a wireless communication system, the UE comprising:
a transceiver (408) configured to receive, from a base station, a measurement control message from a base station to perform a measurement on at least one specific frequency band of a plurality of frequency bands other than at least one serving frequency band for the UE, and transmit, to the base station, information indicating applicability of a compressed mode on carriers corresponding to the at least one specific frequency band to the base station in response to receiving the measurement control message; and
a measurement device (108) configured to:
determine whether the at least one specific frequency band is one of frequency bands that are previously configured to the UE;
determine whether a measurement type is an inter-frequency measurement or an inter-RAT measurement based on the measurement control message, if the at least one specific frequency band is one of configured frequency bands that are previously configured to the UE,
determine whether a compressed mode is to be required for all of the at least one serving frequency band or the compressed mode is required for the at least one specific frequency band based on capabilities of the UE and the information indicating applicability of the compressed mode, if the measurement type is the inter-frequency measurement or the inter-RAT measurement, and
apply the compressed mode only to the at least one specific frequency band except for the remaining frequency bands from the plurality of frequency bands, if the compressed mode is not required for all of the at least one serving frequency band, and
perform the measurement for the at least one specific frequency band to which the compressed mode is applied, except for the remaining frequency bands,
wherein the capabilities of the UE comprises information indicating that the UE is capable to measure more than on frequency band or the UE is capable to measure at least one contiguous frequency of the at least one specific frequency band;
wherein the compressed mode is applied according to compressed mode transmission gap patterns for carriers that belong to the at least one specific frequency band, the compressed mode transmission gap patterns being configured per carrier or group of carriers, and
wherein the serving frequency band is associated with a serving cell configured to the UE.

6. The UE according to claim 5, further adapted to perform the method according to any one of claims 2 to 4.

## Patentansprüche

1. Verfahren zum Durchführen von Messungen durch ein Benutzergerät UE in einem drahtlosen Kommunikationssystem, wobei das Verfahren Folgendes umfasst:
Empfangen (202) einer Messungssteuernachricht von einer Basisstation, um eine Messung an mindestens einem spezifischen Frequenzband einer Vielzahl von anderen Frequenzbändern als mindestens einem bedienenden Frequenzband für das UE durchzuführen;
Übertragen von Informationen, die die Anwendbarkeit eines komprimierten Modus auf Trägern entsprechend dem mindestens einen spezifischen Frequenzband angeben, an die Basisstation, durch das UE an die Basisstation als Reaktion auf den Empfang der Messungssteuernachricht;
Bestimmen, ob das mindestens eine spezifische Frequenzband eines der Frequenzbänder ist, die zuvor für das UE konfiguriert wurden;
Bestimmen, ob ein Messtyp eine Interfrequenzmessung oder eine Interfunkzugangstechnologie-RAT ist, Messung basierend auf der Messungssteuernachricht, wenn das mindestens eine spezifische Frequenzband eines der konfigurierten Frequenzbänder ist, die zuvor für das UE konfiguriert wurden;
Bestimmen (206), ob ein komprimierter Modus für das gesamte mindestens eine bedienende Frequenzband oder der komprimierte Modus für das mindestens eine spezifische Frequenzband erforderlich ist, basierend auf den Fähigkeiten des UE und den Informationen, die die Anwendbarkeit des komprimierten Modus angeben, wenn der Messtyp die Interfrequenzmessung oder die Inter-RAT-Messung ist;
Anwenden (214) des komprimierten Modus nur auf das mindestens eine bestimmte Frequenzband mit Ausnahme der verbleibenden Frequenzbänder aus der Vielzahl von Frequenzbändern, wenn der komprimierte Modus nicht für das gesamte mindestens eine bedienende Frequenzband erforderlich ist; und Durchführen (210) der Messung für das mindestens eine spezifische Frequenzband, auf das der komprimierte Modus angewendet wird, mit Ausnahme der verbleibenden Frequenzbänder,
wobei die Fähigkeiten des UE Informationen umfassen, die anzeigen, dass das UE in der Lage ist, mehr als ein Frequenzband zu messen, oder das UE in der Lage ist, mindestens eine zusammenhängende Frequenz des mindestens einen spezifischen Frequenzbands zu messen,
wobei der komprimierte Modus gemäß Übertragungslückenmustern des komprimierten Modus für Träger angewendet wird, die zu dem mindestens einen spezifischen Frequenzband gehören, wobei die Übertragungslückenmuster des komprimierten Modus pro Träger oder Gruppe von Trägern konfiguriert sind, und
wobei das bedienende Frequenzband einer bedienenden Zelle zugeordnet ist, die für das UE konfiguriert ist.

2. Verfahren nach Anspruch 1, ferner umfassend:
Anwenden (208) des komprimierten Modus auf das gesamte mindestens eine Serving-Frequenzband, wenn der komprimierte Modus für das gesamte mindestens eine Serving-Frequenzband erforderlich ist.

3. Verfahren nach Anspruch 1,
wobei das Durchführen der Messung ferner das Anwenden des komprimierten Modus auf einen oder mehrere Träger umfasst, die einem ersten Frequenzband oder einem zweiten Frequenzband zugeordnet sind,
wobei das erste Frequenzband einem Frequenzband entspricht, das für die Kommunikation des UE mit der Basisstation konfiguriert ist, und
wobei das zweite Frequenzband einem Frequenzband entspricht, auf dem Messungen durchgeführt werden sollen, wenn der komprimierte Modus für das mindestens eine bestimmte Frequenzband ist.

4. Verfahren nach Anspruch 1, ferner umfassend:
Melden (212) eines Ergebnisses der Messung auf dem mindestens einen spezifischen Frequenzband an die Basisstation.

5. Benutzergerät (UE) zum Durchführen von Messungen in einem drahtlosen Kommunikationssystem, wobei das UE Folgendes umfasst:
einen Transceiver (408), der konfiguriert ist, um von einer Basisstation eine Messungssteuernachricht von einer Basisstation zu empfangen, um eine Messung an mindestens einem spezifischen Frequenzband einer Vielzahl von Frequenzbändern durchzuführen, die von mindestens einem bedienenden Frequenzband für das UE verschieden sind, und Übertragen von Informationen an die Basisstation, die die Anwendbarkeit eines komprimierten Modus auf Träger angeben, die dem mindestens einen spezifischen Frequenzband entsprechen, an die Basisstation als Reaktion auf den Empfang der Messungssteuernachricht; und
eine Messvorrichtung (108), die konfiguriert ist zum:
Bestimmen, ob das mindestens eine spezifische Frequenzband eines der Frequenzbänder ist, die zuvor für das UE konfiguriert wurden;
Bestimmen, ob ein Messtyp eine Interfrequenzmessung oder eine Inter-RAT-Messung ist, basierend auf der Messungsteuermeldung, wenn das mindestens eine spezifische Frequenzband eines der konfigurierten Frequenzbänder ist, die zuvor für das UE konfiguriert wurden,
auf der Grundlage der Fähigkeiten des UE und der Informationen, die die Anwendbarkeit des komprimierten Modus angeben, bestimmen, ob ein komprimierter Modus für das gesamte mindestens eine bedienende Frequenzband erforderlich ist oder ob der komprimierte Modus für das mindestens eine bestimmte Frequenzband erforderlich ist, wenn der Messtyp die Interfrequenzmessung oder die Inter-RAT-Messung ist, und
Anwenden des komprimierten Modus nur auf das mindestens eine bestimmte Frequenzband mit Ausnahme der verbleibenden Frequenzbänder aus der Vielzahl von Frequenzbändern, wenn der komprimierte Modus nicht für das gesamte mindestens eine bedienende Frequenzband erforderlich ist, und
Durchführen der Messung für das mindestens eine bestimmte Frequenzband, auf das der komprimierte Modus angewendet wird, mit Ausnahme der verbleibenden Frequenzbänder,
wobei die Fähigkeiten des UE Informationen umfassen, die anzeigen, dass das UE in der Lage ist, mehr als ein Frequenzband zu messen, oder das UE in der Lage ist, mindestens eine zusammenhängende Frequenz des mindestens einen spezifischen Frequenzbandes zu messen;
wobei der komprimierte Modus gemäß Übertragungslückenmustern des komprimierten Modus für Träger angewendet wird, die zu dem mindestens einen spezifischen Frequenzband gehören, wobei die Übertragungslückenmuster des komprimierten Modus pro Träger oder Gruppe von Trägern konfiguriert sind, und
wobei das bedienende Frequenzband einer bedienenden Zelle zugeordnet ist, die für das UE konfiguriert ist.

6. UE nach Anspruch 5, weiter angepasst, um das Verfahren nach einem der Ansprüche 2 bis 4 durchzuführen.

## Revendications

1. Procédé pour effectuer des mesures par un équipement d'utilisateur, UE, dans un système de communication sans fil, le procédé comprenant :
recevoir (202), d'une station de base, un message de commande de mesure pour effectuer une mesure sur au moins une bande de fréquence spécifique d'une pluralité de bandes de fréquence différentes d'au moins une bande de fréquence de desserte pour l'UE ;
transmettre, par l'UE à la station de base, des informations indiquant l'applicabilité d'un mode compressé sur des porteuses correspondant à l'au moins une bande de fréquence spécifique à la station de base en réponse à la réception du message de commande de mesure ;
déterminer si l'au moins une bande de fréquence spécifique est l'une des bandes de fréquence précédemment configurées pour l'UE ;
déterminer si un type de mesure est une mesure inter-fréquences ou une mesure de technologie d'accès inter-radio, RAT, sur la base du message de commande de mesure, si l'au moins une bande de fréquence spécifique est l'une des bandes de fréquence configurées qui sont précédemment configurées pour l'UE ;
déterminer (206) si un mode compressé est requis pour la totalité de l'au moins une bande de fréquence de desserte ou si le mode compressé est requis pour l'au moins une bande de fréquence spécifique sur la base des capacités de l'UE et des informations indiquant l'applicabilité du mode compressé, si le type de mesure est la mesure inter-fréquences ou la mesure inter-RAT ;
appliquer (214) le mode compressé seulement à l'au moins une bande de fréquence spécifique, à l'exception des bandes de fréquence restantes de la pluralité de bandes de fréquence, si le mode compressé n'est pas requis pour la totalité de l'au moins une bande de fréquence de desserte ; et
effectuer (210) la mesure pour l'au moins une bande de fréquence spécifique à laquelle le mode compressé est appliqué, à l'exception des bandes de fréquence restantes,
où les capacités de l'UE comprennent des informations indiquant que l'UE est capable de mesurer plus d'une bande de fréquence ou que l'UE est capable de mesurer au moins une fréquence contiguë de l'au moins une bande de fréquence spécifique,
où le mode compressé est appliqué selon des modèles d'intervalle de transmission en mode compressé pour des porteuses qui appartiennent à l'au moins une bande de fréquence spécifique, les modèles d'intervalle de transmission en mode compressé étant configurés par porteuse ou groupe de porteuses, et
où la bande de fréquence de desserte est associée à une cellule de desserte configurée pour l'UE.

2. Procédé selon la revendication 1, comprenant en outre :
appliquer (208) le mode compressé à la totalité de l'au moins une bande de fréquence de desserte, si le mode compressé est requis pour la totalité de l'au moins une bande de fréquence de desserte.

3. Procédé selon la revendication 1,
où l'exécution de la mesure comprend en outre l'application du mode compressé sur une ou plusieurs porteuses associées à l'une d'une première bande de fréquence et d'une seconde bande de fréquence,
où la première bande de fréquence correspond à une bande de fréquence qui est configurée pour que l'UE communique avec la station de base, et
où la deuxième bande de fréquence correspond à une bande de fréquence sur laquelle des mesures doivent être effectuées, si le mode compressé est pour l'au moins une bande de fréquence spécifique.

4. Procédé selon la revendication 1, comprenant en outre :
rapporter (212), à la station de base, un résultat de la mesure sur l'au moins une bande de fréquence spécifique.

5. Équipement d'utilisateur, UE, pour effectuer des mesures dans un système de communication sans fil, l'UE comprenant :
un émetteur-récepteur (408) configuré pour recevoir, depuis une station de base, un message de commande de mesure d'une station de base pour effectuer une mesure sur au moins une bande de fréquence spécifique d'une pluralité de bandes de fréquence différente d'au moins une bande de fréquence de desserte pour l'UE, et transmettre, à la station de base, des informations indiquant l'applicabilité d'un mode compressé sur des porteuses correspondant à l'au moins une bande de fréquence spécifique à la station de base en réponse à la réception du message de commande de mesure ; et
un dispositif de mesure (108) configuré pour :
déterminer si l'au moins une bande de fréquence spécifique est l'une des bandes de fréquence précédemment configurées pour l'UE ;
déterminer si un type de mesure est une mesure inter-fréquences ou une mesure inter-RAT sur la base du message de commande de mesure, si l'au moins une bande de fréquence spécifique est l'une des bandes de fréquence configurées précédemment configurées pour l'UE,
déterminer si un mode compressé doit être requis pour la totalité de l'au moins une bande de fréquence de desserte ou le mode compressé est requis pour l'au moins une bande de fréquence spécifique sur la base des capacités de l'UE et des informations indiquant l'applicabilité du mode compressé, si le type de mesure est la mesure inter-fréquences ou la mesure inter-RAT, et
appliquer le mode compressé seulement à l'au moins une bande de fréquence spécifique, à l'exception des bandes de fréquence restantes de la pluralité de bandes de fréquence, si le mode compressé n'est pas requis pour la totalité de l'au moins une bande de fréquence de desserte, et
effectuer la mesure pour l'au moins une bande de fréquence spécifique à laquelle le mode compressé est appliqué, à l'exception des bandes de fréquence restantes,
où les capacités de l'UE comprennent des informations indiquant que l'UE est capable de mesurer plus d'une bande de fréquence ou que l'UE est capable de mesurer au moins une fréquence contiguë de l'au moins une bande de fréquence spécifique ;
où le mode compressé est appliqué selon des modèles d'intervalle de transmission en mode compressé pour des porteuses qui appartiennent à l'au moins une bande de fréquence spécifique, les modèles d'intervalle de transmission en mode compressé étant configurés par porteuse ou groupe de porteuses, et
où la bande de fréquence de desserte est associée à une cellule de desserte configurée pour l'UE.

6. UE selon la revendication 5, adapté en outre pour mettre en oeuvre le procédé selon l'une quelconque des revendications 2 à 4.
